(19) Europäisches Patentamt
European Patent Office
Office européen des brevets

(11) **EP 1 770 597 A1**

## (12) EUROPEAN PATENT APPLICATION

(43) Date of publication:
**04.04.2007 Bulletin 2007/14**

(51) Int Cl.:
***G06K 9/62*** *(2006.01)*

(21) Application number: **06019566.6**

(22) Date of filing: **19.09.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **30.09.2005 US 241022**<br><br>(71) Applicant: **MITSUBISHI ELECTRIC CORPORATION**<br>**Chiyoda-ku**<br>**Tokyo**<br>**Tokyo 100-8310 (JP)** | (72) Inventor: **Brand, Matthew, E.**<br>**Newton**<br>**Massachusetts 02460 (US)**<br><br>(74) Representative: **Pfenning, Meinig & Partner GbR**<br>**Patent- und Rechtsanwälte**<br>**Theresienhöhe 13**<br>**80339 München (DE)** |

(54) **Method for selecting a particular model of a class of objects from a set of models of the class**

(57) A particular model of a class of objects is selected from a set of models of the class, wherein the class models are graphs, each graph including a plurality of vertices representing objects in the class and edges connecting the vertices. Subsets of vertices of a selected set of graphs representing the class of objects are grouped to produce a subgraph. A set of anchor vertices is selected from the subgraph. Sub-graph parameterizations are determined for the set of anchor vertices of the subgraph and the subgraph parameterizations are combined with the set of class models to identify a particular class model.

Figure 3

## Description

### Field of the Invention

The invention relates generally to modeling sampled data, and more particularly, to representing high-dimensional data with low-dimensional models.

### Background of the Invention

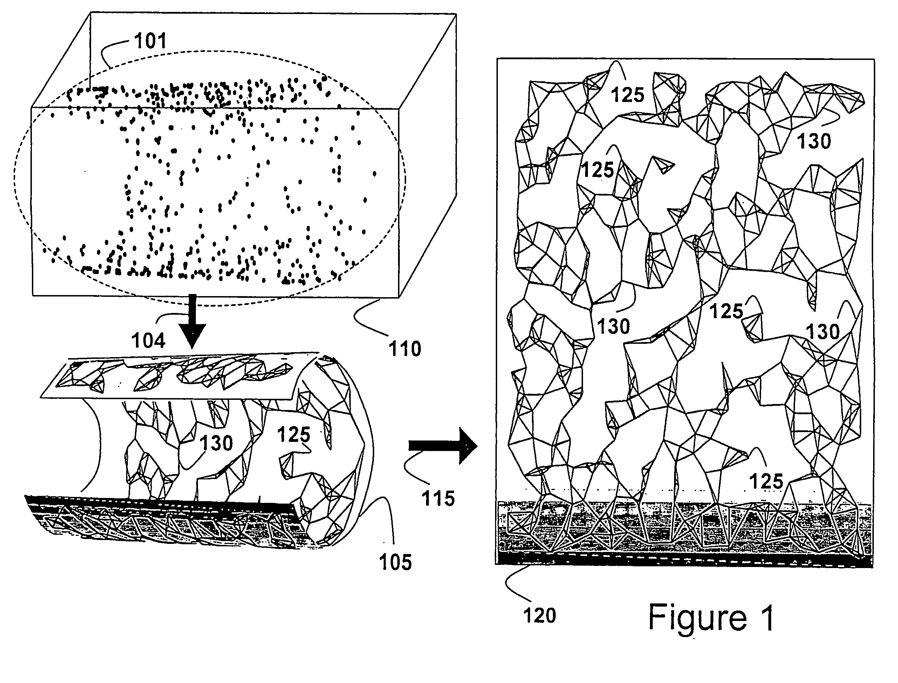

As shown in Figure 1, nonlinear dimensionality reduction (NLDR) generates a low-dimensional representation 120 from high-dimensional sampled data 101. The data 101 sample a $d$ dimensional manifold $\mathcal{M}$ 105 that is embedded in an ambient space $\mathfrak{R}^D$ 110, with $D > d$. The goal is to separate 115 the extrinsic geometry of the embedding, i.e., how the manifold $\mathcal{M}$ 105 is shaped in the ambient space $\mathfrak{R}^D$, from its intrinsic geometry, i.e., the $d$-dimensional coordinate system 120 of the manifold $\mathcal{M}$. The manifold can be represented 104 as a graph having vertices 125 connected by edges 130, as is commonly understood in the field of graph theory. The vertices 125 represent sampled data points 101 on the manifold in the high dimensional coordinate system and the edges 130 are lines or arcs that connect the vertices 125. Thus, the graph is embedded in the manifold. The term graph should not be confused with a graph of a function as in analytic geometry, i.e., a plot.

For example, if it is known how a manifold of objects, such as human faces, is embedded in a ambient space of images of the faces, then the intrinsic geometry of a model can be used to edit, compare, and classify images of faces, while the extrinsic geometry can be used to detect faces in images and synthesize new images of faces.

As another example, a manifold of vowel sound objects embedded in a space of speech sounds can be used to model the space of acoustic variations in the vowel sounds, which can be used to separate classes of vowel sounds.

Known spectral methods for generating a low-dimensional model of high dimensional data by embedding graphs and immersing data manifolds in low-dimensional spaces are unstable due to insufficient and/or numerically ill-conditioned constraint sets.

Embedding a graph under metric constraints is a frequent operation in NLDR, ad-hoc wireless network mapping, and visualization of relational data. Despite advances in spectral embedding methods, prior art NLDR methods are impractical and unreliable. One difficulty associated with NLDR is automatically generating embedding constraints that make the problem well-posed, well-conditioned, and solvable on practical amount of time. Well-posed constraints guarantee a unique solution. Well-conditioned constraints make the solution numerically separable from sub-optimal solutions.

Both problems manifest as a small or zero eigengap in the spectrum of the embedding constraints, indicating that the graph, i.e., the model, is effectively *non-rigid* and there is an eigen-space of solutions where the optimal solution is indistinguishable from other solutions. Small eigengaps make it difficult or even impossible to separate a solution from its modes of deformation.

### Graph Embeddings

In Laplacian-like local-to-global graph embeddings, the embedding of each graph vertex is constrained by the embeddings of immediate neighbors of the vertex, i.e., in graph theory terminology, the 1-ring of the vertex. For dimensionality reduction, the vertices are data points that are sampled from a manifold that is somehow 'rolled-up' in the ambient high-dimensional sample space, and the graph embedding constraints are designed to reproduce local affine structure of that manifold, while 'unrolling' the manifold in a lower dimensional target space.

Prior art examples of local-to-global graph embeddings include Tutte's method, see W.T. Tutte, "How to draw a graph," Proc. London Mathematical Society, 13:743-768, 1963, Laplacian eigenmaps, see Belkin et al., "Laplacian eigenmaps for dimensionality reduction and data representation," volume 14 of Advances in Neural Information Processing Systems, 2002, locally linear embeddings (LLE), see Roweis et al., "Nonlinear dimensionality reduction by locally linear embedding," Science, 290:2323-2326, December 22 2000, Hessian LLE, see Donoho et al., "Hessian eigenmaps," Proceedings, National Academy of Sciences, 2003, charting, see Brand, "Charting a manifold," Advances in Neural Information Processing Systems, volume 15, 2003, linear tangent-space alignment (LTSA), see Zhang et al., "Nonlinear dimension reduction via local tangent space alignment," Proc., Conf. on Intelligent Data Engineering and Automated Learning, number 2690 in Lecture Notes on Computer Science, pages 477-481, Springer-Verlag, 2003, and geodesic nullspace analysis (GNA), see Brand, "From subspaces to submanifolds," Proceedings, British Machine Vision Conference, 2004.

The last three methods referenced above construct local affine constraints of maximal possible rank, leading to substantially stable solutions.

LTSA and GNA take an $N$-vertex graph embedded in an ambient space $\mathbf{R}^D$ with vertex positions $\mathbf{X} = [\mathbf{x}_1, \cdots, \mathbf{x}_N] \in \mathbf{R}^{D \times N}$, and re-embed the graph in a lower-dimensional space $\mathbf{R}^d$ with new vertex positions $\mathbf{Y} = [\mathbf{y}_1, \cdots, \mathbf{y}_N] \in \mathbf{R}^{d \times N}$, preserving local affine structure. Typically, the graph is constructed from point data by some heuristic, such as $k$-nearest neighbors.

The embedding works as follows. Take one such neighborhood of $k$ points and construct a local $d$-dimensional coordinate system $\mathbf{X}_m \doteq [\mathbf{x}_i, \mathbf{x}_j, \cdots] \in \mathbf{R}^{d \times k}$, using, for example, local principal components analysis (PCA). The PCA produces a nullspace matrix $\mathbf{Q}_m \in \mathbf{R}^{k \times (k-d-1)}$, having orthonormal columns that are orthogonal to the rows of coordinate system $\mathbf{X}_m$ and to a constant vector $\mathbf{1}$. This nullspace is also orthogonal to any affine transform $A(\mathbf{X}_m)$ of the local coordinate system, such that any translation, rotation, or stretch that preserves parallel lines in the local coordinate system will satisfy $A(\mathbf{X}_m)\mathbf{Q}_m = \mathbf{0}$. Any other transform $T(\mathbf{X}_m)$ can then be separated into an affine component $A(\mathbf{X}_m)$ plus a nonlinear distortion, $N(\mathbf{X}_m) = T(\mathbf{X}_m)\mathbf{Q}_m\mathbf{Q}_m^T$.

The LTSA and GNA methods assemble the *nullspace projectors* $\mathbf{Q}_m\mathbf{Q}_m^T$, $m = 1,2, \cdots$ into a sparse matrix $\mathbf{K} \in \mathbf{R}^{N \times N}$ that sums (LTSA) or averages with weights (GNA) nonlinear distortions over all neighborhoods in the graph.

Embedding basis $\mathbf{V} \in \mathbf{R}^{d \times N}$ has row vectors that are orthonormal and that span the column nullspace of $[\mathbf{K}, \mathbf{1}]$; i.e., $\mathbf{VV}^T = I$ and $\mathbf{V}[\mathbf{K},\mathbf{1}] = \mathbf{0}$. It follows that if an embedding basis $\mathbf{V}$ exists and is provided as a basis for embedding the graph in $\mathbf{R}^d$, then each neighborhood in that embedding will have *zero nonlinear distortion* with respect to its original local coordinate systems, see Zhang, et al., above.

Furthermore, if the neighborhoods are sufficiently overlapped to make the graph affinely rigid in $\mathbf{R}^d$, the transform from the original data $\mathbf{X}$ to the embedding basis $\mathbf{V}$ 'stretches' every neighborhood of the graph the same way. Then, a linear transform $\mathbf{T} \in \mathbf{R}^{d \times d}$ removes the stretch, giving lower-dimensional vertex positions $\mathbf{Y} = \mathbf{TV}$, such that the transform from higher dimensional data $\mathbf{X}$ to lower dimensional embedding $\mathbf{Y}$ involves only rigid transforms of local neighborhoods, i.e., the embedding $\mathbf{Y}$ is isometric. When there is any kind of noise or measurement error in the process, a least-squares optimal approximate embedding basis $\mathbf{V}$ can be obtained via thin singular value decomposition (SVD) of $\mathbf{K} \in \mathbf{R}^{N \times N}$ or thin eigenvalue decomposition (EVD) of the null space of $\mathbf{K}$, i.e., $\mathbf{KK}^T$. Because matrix $\mathbf{K}$ is very sparse with $O(N)$ nonzero values, iterative subspace estimators typically exhibit $O(N)$ time scaling. When sparse matrix $\mathbf{K}$ is constructed using GNA, the corresponding singular values $s_{N-1}, s_{N-2}, \cdots$ measure the point wise average distortion per dimension.

One of the central problems of prior art graph embedding is that the eigenvalues of $\mathbf{KK}^T$, and of *any* constraint matrix in local NLDR, grow quadratically near $\lambda_0 = 0$, which is the end of the spectrum that furnishes the embedding basis $\mathbf{V}$, see Appendix A for a proof of the quadratic growth of the eigenvalues of $\mathbf{KK}^T$. Quadratic growth means that the eigenvalue curve is almost flat at the low end of the spectrum ($\lambda_{i+1} - \lambda_i \approx 0$) such that an eigengap that separates the embedding basis from other eigenvectors is negligible. A similar result is observed in the spectra of simple *graph* Laplacians, which are also sigmoidal with a quadratic growth near zero.

In graph embeddings, the constraint matrix plays a role akin to the stiffness matrix in finite-element methods, and in both cases the eigenvectors associated with near-zero eigenvalues specify an optimal parameterization, i.e., the solution, and less optimal distorted modes of the solution, also known as 'vibration'. The problem facing an eigensolver, or any other estimator of the nullspace, is that a convergence rate is a linear function of the relative eigengap $\dfrac{|\lambda_c - \lambda_{c+1}|}{\lambda_{\max} - \lambda_{\min}}$

or eigenratio $\dfrac{\lambda_{c+1}}{\lambda_c}$ between the desired and remaining principal eigenvalues, see Knyazev, "Toward the optimal preconditioned eigensolver," SIAM Journal on Scientific Computing, 23(2):517-541, 2001. Numerical stability of the eigenvectors similarly depends on the eigengap. As stated described above, for local-to-global NLDR, the eigengap and eigenratio are both very small, making it difficult to separate the solution i.e., a best low-dimensional model of the high-dimensional data, from distorted modes of the solution i.e., vibrations.

Intuitively, low-frequency vibrations make very smooth bends in a graph, which incur very small deformation penalties at the local constraint level. Because eigenvalues of a graph sum those penalties, the eigenvalues associated with low-frequency modes of deformation have very small values, leading to poor numerical conditioning and slow convergence of eigensolvers. The problem increases in scale for larger problems where fine neighborhood structure makes for closely spaced eigenvalues, making it impossible for iterative eigensolvers to accurately determine the smallest eigenvalues and vectors representing an optimal best solution, i.e., a best model, having the least or no vibration.

Therefore, there is a need for a method for selecting a particular low-dimensional model from a set of low-dimensional models of a class of objects, where the set of low-dimensional models is derived from high dimensional sampled data.

**Summary of the Invention**

The invention selects a particular model of a class of objects from a set of models of the class, wherein the class models are graphs, each graph including a plurality of vertices representing objects in the class and edges connecting the vertices. Subsets of vertices of a selected set of graphs representing the class of objects are grouped to produce a subgraph. A set of anchor vertices are selected from the subgraph. Sub-graph parameterizations are determined for the set of anchor vertices of the subgraph and the subgraph parameterizations are combined with the set of class models to identify a particular class model.

**Brief Description of the Drawings**

Figure 1 is a block diagram of basic steps for non-linear dimensionality reduction;

Figure 2 is a block diagram of a prior art method for generating a set of low-dimensional models of a class of objects;

Figure 3 is a block diagram of a method for selecting a particular model from a set of models representing a class of objects according to the invention;

Figure 4 is a block diagram of recursive neighborhood expansion according to the invention;

Figure 5 is a block diagram of a non-rigid graph representing a class of objects; and

Figure 6 is a block diagram of a method for selecting a particular model from a set of low dimensional models representing a class of objects based on high dimensional data according to the invention.

**Detailed Description of the Preferred Embodiment**

**Generating an Input Class Model Using NLDR**

The invention takes as input one of a set of low-dimensional models of objects, i.e., a set of local-to-global embedding representing the class of objects, described below in further detail. The set of models are generated using non-linear dimensionality reduction (NLDR). In the preferred embodiment, the set of models is generated using geodesic nullspace analysis (GNA) or, optionally, linear tangent-space alignment (LTSA), because all other known local-to-global embedding methods employ a subset of the affine constraints of LTSA and GNA.

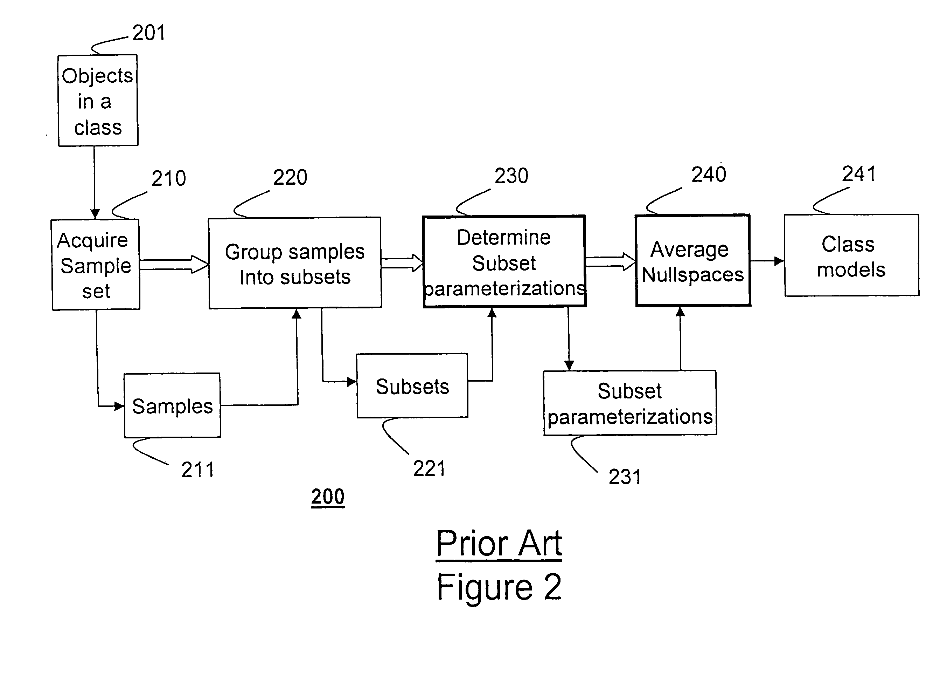

Figure 2 shows a prior art method for generating a set of models 301 using geodesic nullspace analysis (GNA), which is described in U.S. Patent Application serial number 10/932,791, "Method for Generating a Low-Dimensional Representation of High-Dimensional Data," filed on September 2, 2004, and owned by the assignee of the present application and incorporated herein by reference in its entirety. To generate the input set of models 301 using GNA, objects 201 in a class existing in a high-dimensional ambient space $\mathfrak{R}^D$ are sampled 210 from a $d$ dimensional manifold embedded in the ambient space, where $D > d,$ to produce a set of samples 211. For example, the samples 211 are images of the faces. There is at least one image (sample) for each face. Each sample includes multiple data values representing characteristics of the object, e.g., the pixel intensity values, perhaps in color, in the images. Thus, each sample can include many millions of data values. The data values for each sample are organized as a vector. For images, this can be done by conventional scan line conversion. The goal of NLRD is to separate the extrinsic geometry of the embedding. That is, it is desired to determine the shape of the manifold in the ambient space $\mathfrak{R}^D$ from the intrinsic geometry of the manifold, i.e., the native $d$-dimensional coordinate system on the manifold.

The manifold is locally isometric to an open subset of a target space $\mathfrak{R}^D$ and embedded in the ambient Euclidean space $\mathfrak{R}^D > d$ by an unknown quadratic function $C^2$. The manifold $\mathcal{M}$ is a Riemannian submanifold of the ambient space $\mathfrak{R}^D$.

The manifold has an extrinsic curvature in the ambient space $\mathfrak{R}^D$, but a zero intrinsic curvature. However, the isometric immersion of the manifold in the target space $\mathfrak{R}^D$ can have a nontrivial shape with concave boundaries.

The set of samples 211, represented by $\mathbf{X} \doteq [\mathrm{x}_1, \cdots, \mathrm{x}_N] \in \mathfrak{R}^{D \times N}$, records locations of N samples of the manifold in the ambient space $\mathfrak{R}^D$.

An isometric immersion of the set of samples $\mathbf{Y}_{iso} \doteq [\mathrm{y}_1, \cdots, \mathrm{y}_N] \in \mathfrak{R}^{d \times N}$ eliminates the extrinsic curvature of the set to recover the isometry up to rigid motions in the target space $\mathfrak{R}^D$.

The samples 211 are grouped 220 into subsets of samples 221, i.e., neighborhoods, so that each subset overlaps with at least one other subset. Each subset of samples has $k$ samples, where $k$ can vary. The grouping 220 is specified by an adjacency matrix $\mathbf{M} = [\mathrm{m}_1, \cdots, \mathrm{m}_M] \in \mathfrak{R}^{N \times M}$ with $M_{nm} > 0$ if and only if the $n^{\text{th}}$ point is in the $m^{\text{th}}$ subset.

Subset parameterizations $\mathbf{X}_m \in \mathfrak{R}^{d \times k}$ 231 are determined 230 for each sample subset 221. The subset parameterizations 231 can contain a locally isometric parameterization of the $k$ samples in the $m^{\text{th}}$ subset. Euclidean pairwise distances in the parameterizations are equal to geodesic distances on the manifold.

When applying geodesic nullspace analysis, nullspaces of the isometric low-dimensional parameterizations are averaged 240 to obtain a matrix having a nullspace containing a set of low-dimensional models 301 of the class of objects. It is one goal of the invention to provide a method for selecting a particular model 331 from the set of models 301. It should be understood that each model in the set 301 can be represented by a graph of the objects in the lower-dimensional target space $\mathfrak{R}^d$. The invention improves over prior art methods of selecting a particular model from the set 301.

**Neighborhood Expansion**

The invention effectively stiffens a mesh of vertices and edges of a graph, i.e., model, of the objects in the lower-dimensional target space $\mathfrak{R}^d$ with longer-range constraints applied to expanded subsets of vertices and edges in the graph of the $d$ dimensional manifold embedded in the ambient space $\mathfrak{R}^D$.

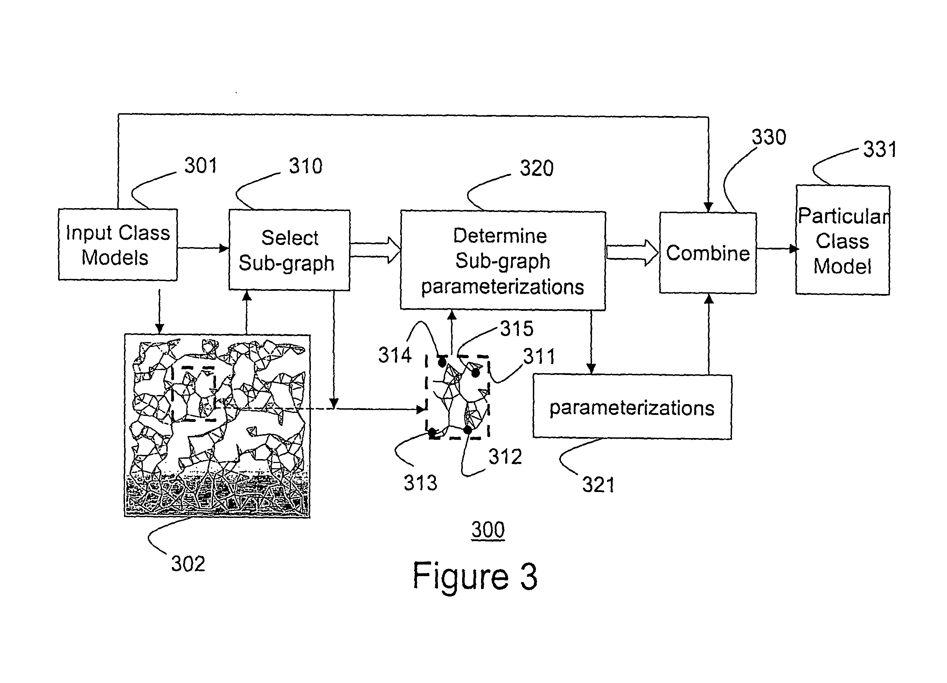

As shown in Figure 3, a method 300 according to the invention groups 310 sample subsets of a selected model 302 from the set of models 301 to produce a subgraph 311. The sub-graph 311 includes a set of overlapped neighborhoods of vertices and edges of the selected model 302, i.e., a graph representing the $d$ dimensional manifold embedded in ambient space $\mathfrak{R}^D$. Subgraph parameterizations 321 are determined 320 for a set of anchor vertices 312-315 selected from the subgraph. In the preferred embodiment, the anchor vertices are vertices on a perimeter of the subgraph, however the positions of anchor vertices are not limited to the perimeter. The subgraph parameterizations 321 are combined 330 with the input set of models 301 to identify a particular model 331.

As described above with respect to Figure 2, when applying GNA to the original sample set 210, nullspaces of the isometric low-dimensional parameterizations are averaged to obtain a matrix having a nullspace containing a set of low-dimensional models 301 of the class of objects. Referring back to Figure 3, the combining 330 according to an embodiment of the invention averages nullspaces of the sub-graph parameterizations 321 and nullspaces of the input set of models 301. Because the sub-graph parameterizations 321 are determined between samples separated by greater distances than the original sample subsets 221, eigenvalues that are not in the nullspace have a greater value after the combining 330, thereby increasing the eigengap between a particular model 331 and the remaining the set of models 301.

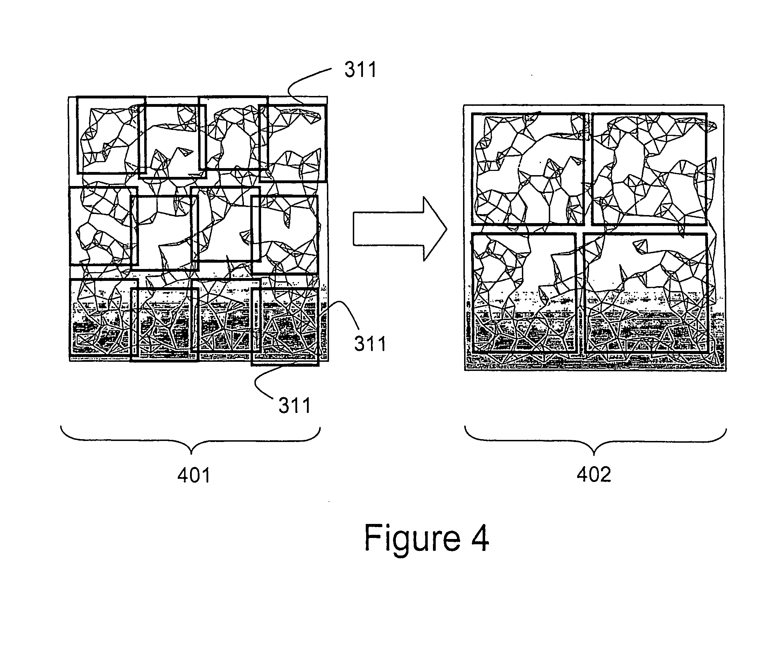

As shown in Figure 4, the invention can be applied to an entire selected class model 302 by determining parameterizations for multiple sub-graphs 311 that approximately or entirely covers 401 the selected model 302 but adds constraints on just a small subset of all vertices, e.g., the anchor vertices. The parameterizations for the multiple sub-graphs are combined 330 in the same manner as shown in Figure 3. Further sub-graph parameterizations 402 of increasing size can be applied to the selected model 302 in a recursive manner. Anchor vertices for larger size sub-graphs are selected only from anchor vertices from previous recursions.

In the preferred embodiment, a constant fraction of vertices are selected as anchor vertices for each sub-graph size, e.g., ¼ of the vertices are selected for each recursion independent of the size of the sub-graph.

If the number of sub-graphs and anchor vertices is halved at each recursion, then multiscale stiffening can be performed in *O(N)* time with no more than a doubling of the number of nonzeros in the K matrix.

### Regularizing a Low-Dimensional Class Model Using Edge Length Constraints

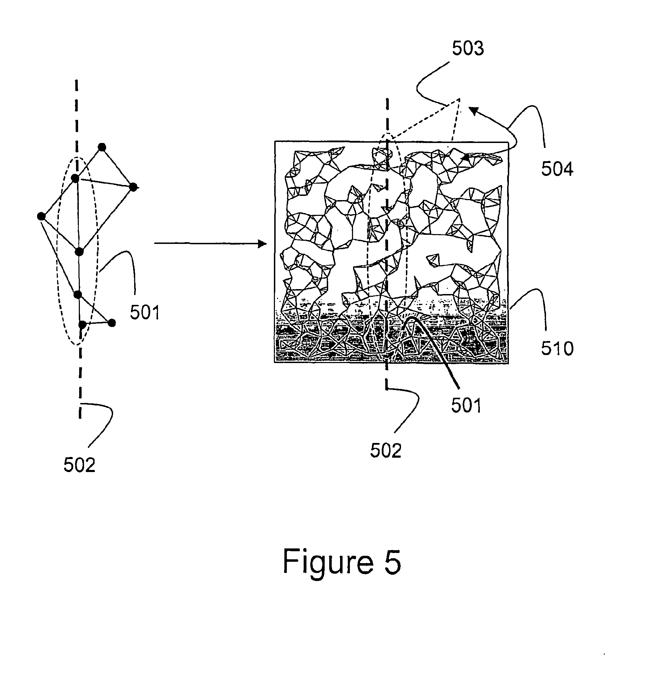

Even if a model, i.e., graph, is stiffened, it may be the case that the graph is intrinsically non-rigid. That commonly occurs when the graph is generated by a heuristic, such as k-nearest neighbors. In such cases, the embedding basis $V \in R^{c \times N}$ has greater dimension c than the target space $\mathfrak{R}^d$ (c > d). For example, as shown in Figure 5, if a subset of vertices and edges 501 of a model 510 having $d$=2 are co-linear, they create an axis 502, which allows a variety of folds in the manifold in $\mathfrak{R}^d$, e.g., fold 503 in the graph. In that case, the set of models span all possible folded configurations 504. Thus, the embedding is ill-posed, and regularization is needed to select a most unfolded model from the set of models.

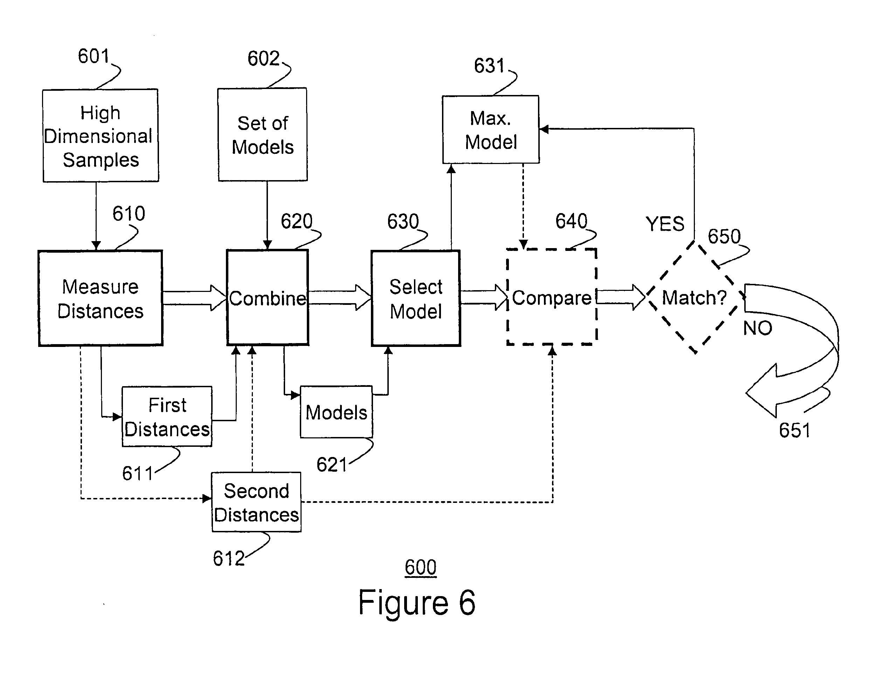

Figure 6 shows a method 600 for selecting, from a set of models 602, a model 631 having maximally dispersed vertices, i.e., a most unfolded graph. First distances 611 between a subset of high dimensional samples 601 are measured 610. It should be understood that the high-dimensional samples correspond to vertices in the low-dimensional models. The first distances are combined 620 with the set of models. The combining 620 identifies a subset of models having distances between vertices, corresponding to the subset of high-dimensional samples, constrained by the first distances. In the preferred embodiment, the first distances identify a subset of models having edge lengths constrained by the first distances. A particular model 631 having maximized distances between all vertices is selected 630 from the subset of models. In the preferred embodiment, distances between each vertex in the particular model and all 4-hop neighbors of each vertex are maximized. Thus, the most unfolded graph selected as the model satisfies the affine constraints encoded in the matrix **K**, maximizes distances between a mutually repelling subset of vertices, and satisfies exact distance constraints on some subset of edges.

Optionally, a second set of distances 612 between a second subset of the high-dimensional samples 601 can be compared 640 to corresponding distances, e.g. edge lengths, in the particular model 631. If distances between vertices, corresponding to the second subset of high-dimensional samples, are constrained by the second distances, there is a match 650 confirming the selection 630 of the particular model is correct. If there is not a match, the method is repeated 651, with the second distances 612 combined 620 with the set of models and the first distances.

Formally, a mixing matrix $U \in R^{c \times d}$ has orthogonal columns of arbitrary nonzero norm. An error vector $\sigma = [\sigma_1, \cdots, \sigma_c]^T$ contains singular values of matrix **K** associated with its left singular vectors, i.e., the rows of embedding basis **V**. Mixing matrix **U** selects a metrically correct embedding from the space of possible solutions spanned by the rows of embedding basis **V**.

The target embedding, $Y = [y_1, \cdots, y_N] \doteq U^\top V \in \mathfrak{R}^{d \times N}$, has an overall distortion $\|U^\top \sigma\|$ and a distance $\|y_i - y_j\| = \|U^T(v_i - v_j)\|$ between any two vertices ($v_i$ being the ith column of embedding basis **V**). The optimization problem is to minimize distortion while maximizing the dispersion

$$U^* = \max_U -\|U^\top \sigma\|^2 + \sum_{pq} r_{pq}^2 \|y_p - y_q\|^2 \qquad (1)$$

for some choice of weights $r_{pq} \geq 0$, preserving distances

$$\forall_{ij \in \text{EdgeSubset}} \|y_i - y_j\| \leq D_{ij} \qquad (2)$$

on at least $d$ edges forming a simplex of nonzero volume in $\mathfrak{R}^d$, otherwise the embedding can collapse in some dimensions. Edge lengths can be unequal because edge distances $D_{ij}$, measured as straight-line distances, are chordal in the ambient space $\mathfrak{R}^D$ rather than geodesic in the manifold, and thus may be inconsistent with a low dimensional embedding.

The inequality allows some edges to be slightly shortened in favor of more dispersed, and thus flatter, lower-dimensional embeddings. Distance constraints corresponding to all or a random sample of the edges in the graph are enforced. The distance constraints do not have to form a connected graph.

The identity $\|\mathbf{Y}\|_F^2 = \|\mathbf{U}^\top \mathbf{V}\|_F^2 = \text{trace}(\mathbf{U}^\top \mathbf{V} \mathbf{V}^\top \mathbf{U}) = \text{trace}(\mathbf{V} \mathbf{V}^\top \mathbf{U} \mathbf{U}^\top)$, applied to equations

1-2 produces a semi-definite program (SDP) on objective $\mathbf{G} \doteq \mathbf{U}\mathbf{U}^\top > \mathbf{0}$:

$$\max_{\mathbf{G}} \text{trace}((\mathbf{C} - \text{diag}(\sigma)^2)\mathbf{G}) \tag{3}$$

$$\text{with } \mathbf{C} \doteq \sum_{pq} r_{pq}^2 (\mathbf{v}_p - \mathbf{v}_q)(\mathbf{v}_p - \mathbf{v}_q)^\top \tag{4}$$

$$\forall_{i,j \in \text{EdgeSubset}} \text{trace}((\mathbf{v}_i - \mathbf{v}_j)(\mathbf{v}_i - \mathbf{v}_j)^\top \mathbf{G}) \le D_{ij}^2. \tag{5}$$

In particular, if all vertices repel equally ($\forall_{pq} r_{pq} = 1$), then $\mathbf{C} = \mathbf{V}\mathbf{V}^\top = \mathbf{I}$, and trace $(\mathbf{C}\mathbf{G}) = \sum_{pq} \|y_p - y_q\|^2 = \|\mathbf{Y}\|_F^2$. Because $\mathbf{V} \perp \mathbf{1}$, the embedding is centered.

At the extreme of $c = d$, where $\mathbf{U} = \mathbf{T}$ is an upgrade to isometry, the SDP is unnecessary. At $c = D$-1, semi-definite graph embedding is applied, where a $\text{range}(\mathbf{V}) = \text{span}(\mathfrak{R}^N \perp \mathbf{1})$ replaces the centering constraints, thus LTSA/GNA is unnecessary. In between, there is a blend called Non-rigid Alignment (NA). With iterative eigensolving, LTSA/GNA takes $O(N)$ time, but requires a globally rigid set of constraints. The semidefinite graph embedding does not require rigid constraints, but has $O(N^6)$ time scaling.

**Non-rigid Alignment**

Non-rigid Alignment (NA) uses LTSA/GNA to construct an embedding basis that substantially reduces the semi-definite program. In addition, the option of combining an incomplete set of neighborhoods with an incomplete set of edge length constraints is possible, further reducing both problems. Although this method does require an estimate of the local dimension for the initial LTSA/GNA, the method inherits from semidefinite graph embeddings the property that the spectrum of higher dimensional data $\mathbf{X}$ gives a sharp estimate of the global embedding dimension, because the embedding is spanned by embedding basis $\mathbf{V}$. The local dimension can be over-estimated, which reduces the local nullspace dimension and thus the global rigidity, but the additional degrees of freedom can then be fixed in the SDP problem.

**Reducing the SDP constraints**

The SDP equality constraints can be rewritten in matrix-vector form as $\mathbf{A}^\top \text{svec}(\mathbf{G}) = \mathbf{b}$, where $\text{svec}(\mathbf{G})$ forms a column vector from the upper triangle of $\mathbf{X}$ with the off-diagonal elements multiplied by $\sqrt{2}$. Here each column of constraint matrix **A** contains a vectorized edge length constraint (e.g., svec($(\mathbf{v}_i\text{-}\mathbf{v}_j)(\mathbf{v}_i\text{-}\mathbf{v}_j)^\mathrm{T}$) for an equality constraint) for some edge $i{\leftrightarrow}j$; the corresponding element of vector **b** contains the value $D_{ij}^2$. A major cost of the SDP solver lies in operations on the matrix $\mathbf{A} \in R^{c2\times e}$, which may have a large number of linearly redundant columns.

When the problem has an exact solution (equation 5 is feasible as an equality), this cost can be reduced by projection: Let $\mathbf{F} \in R^{e\times f}$, $f << e$ be a column-orthogonal basis for the principal row-subspace of constraint matrix **A**, which can be estimated in $O(e\,f^2c^2)$ time via thin SVD. From the Mirsky-Eckart theorem it follows that the $f$ equality constraints,

$$\mathbf{F}^\mathrm{T}\mathbf{A}^\mathrm{T}\mathrm{vec}(\mathbf{G}) = \mathbf{F}^\mathrm{T}\mathbf{b} \qquad\qquad (6)$$

are either equivalent to or a least-squares optimal approximation of the original equality constraints. For large, exactly solvable problems, it is not unusual to reduce the cardinality of constraint set by 97% without loss of information.

When the problem does not have an exact solution, i.e., equation 5 is only feasible as an inequality, the SDP problem can be solved with a small subset of randomly chosen edge length inequality constraints. In conjunction with the affine constraints imposed by the subspace **V**, this suffices to satisfy most of the remaining unenforced length constraints. Those that are violated can be added to the active set and the SDP re-solved, repeating until all are satisfied.

**Application to speech data**

The TIMIT speech database is a widely available collection of audio waveforms and phonetic transcriptions for 2000+ sentences uttered by 600+ speakers. One application of the invention models the space of acoustic variations in vowel sounds. Starting with a standard representation, a vector of $D$ = 13 mel-cepstral features is determined for each 10 millisecond frame that was labeled as a vowel in the transcriptions.

To reduce the impact of transcription errors and co-articulatory phenomena, the data are narrowed to the middle half of each vowel segment, yielding roughly $N$ = 240,000 samples in R13. Multiple applications of PCA to random data neighborhoods suggested that the data is locally 5-dimensional. An NA embedding of the 7 approximately-nearest neighbors graph with 5-dimensional neighborhoods and a 25-dimensional basis took slightly less than 11 minutes to determine. The spectrum is sharp, with >99% of the variance in 7 dimensions, >95% in 5 dimensions, and >75% in 2 dimensions.

A PCA rotation of the raw data matches these percentages at 13, 9, and 4 dimensions respectively. Noting the discrepancy between the estimated local dimensionality and global embedding dimension, slack variables with low penalties were introduced to explore the possibility that the graph was not completely unfolding.

A longstanding rule-of-thumb in speech recognition is that a full-covariance Gaussian is competitive with a mixture of 3 or 4 diagonal-covariance Gaussians [LRS83]. The important empirical question is whether the NA representation offers a better separation of the classes than the PCA. This can be quantified (independently of any downstream speech processing) by fitting a Gaussian to each phoneme class and calculating the symmetrized KL-divergence between classes.

Higher divergence means that fewer bits are needed to describe classification errors made by a (Gaussian) quadratic classifier. The divergence between classes in the d = 5 NA representation was on average approximately 2.2 times the divergence between classes in the d = 5 PCA representation, with no instances where the NA representation was inferior. Similar advantages were observed for other values of $d$, even, $d$ = 1 and $d = D.$

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

# APPENDIX A

We can view the constraint matrix $\mathbf{K}$ as a discrete approximation to a convolution of a candidate embedding $\mathbf{Z}$ with a filter If we plot columns of $\mathbf{K}$, this filter resembles an inverted Laplacian. Analysis shows that this is indeed the case:

**Proposition 4.** *Let* $\mathbf{Z} \doteq [\mathbf{z}_1, \cdots, \mathbf{z}_N] \in \mathbb{R}^{d \times N}$ *with* $\mathbf{z}_i = z(\mathbf{y}_i)$ *be a data parameterization given by some* $C^2$ *multivalued map* $z : \mathcal{M} \to \mathbb{R}^d$ *on the intrinsic coordinates* $\mathbf{y}_i$. *Let*

$$\mathbf{K} \doteq \left( \sum_m \mathbf{S}_m \mathbf{Q}_m \mathbf{Q}_m^\top diag(\mathbf{w}_m) \mathbf{S}_m^\top \right) diag(\sum_m \mathbf{S}_m \mathbf{w}_m)^{-1} \qquad (7)$$

*where binary indexing matrix* $\mathbf{S}_m \in \{0,1\}^{N \times k}$ *select* $k$ *points forming the mth neighborhood and neighborhood weight vector* $\mathbf{w}_m \in \mathbb{R}^k$ *assigns points weights according to their distance from the neighborhood center:* $(\{\mathbf{w}_m\}_i \propto \exp(-\|\{\mathbf{X}_m\}_i - \overline{\mathbf{X}_m}\|^2 / 2\sigma^2)/\sigma)$. *Then each column of* $\mathbf{K}$ *is a discrete difference of Gaussians operator with the parameterization error* $\|\mathbf{ZK}\|_F^2$ *approximating* $\|z - G*z - \nabla^2 G*z\|^2$, *the difference between* $z$ *and a smoothed version of itself, minus its convolution with a Laplacian-of-Gaussian operator.*

*Proof.* (prop. 4) For simplicity, we will first consider the case of a 1D manifold sampled at regular intervals. Recall that $\mathbf{K}$ is an average of neighborhood nullspace projectors, each of the form $\mathbf{N}_m = \mathbf{Q}_m \mathbf{Q}_m^\top = \mathbf{I} - \frac{1}{k}\mathbf{1}\mathbf{1}^\top - \mathbf{P}_m \mathbf{P}_m^\top$, where $\mathbf{P}_k \in \mathbb{R}^{k \times d}$ is an orthogonal basis of centered local coordinates $\mathbf{X}_m - \overline{\mathbf{X}_m}\mathbf{1}^\top$. Because orthogonalization is a linear operation, $\frac{1}{k} - \{\mathbf{N}_m\}_{i \neq j}$ is proportional to $\|\{\mathbf{X}_m\}_i - \overline{\mathbf{X}_m}\| \cdot \|\{\mathbf{X}_m\}_j - \overline{\mathbf{X}_m}\|$, the product of the distances of points $i$ and $j$ from the clique centroid. Viewing the elements of the matrix $\mathbf{P}_m \mathbf{P}_m^\top$ as surface heights, we have a quadratic saddle surface, maximally positive in the upper left and lower right corners, and maximally negative in the upper right and lower left corners. In our simplified case, $\mathbf{P}_m = k^{-1/2} \cdot [-j, 1-j, \cdots, j-1, j]^\top$ where $k = 2j + 1$ is the size of each neighborhood, and elements in each column of $\mathbf{K}$ are Gaussian-weighted sums along the diagonals of $\mathbf{N}_m$. Precisely, for the $p$th non-boundary neighborhood, the $n$th nonzero subdiagonal element in a column of $\mathbf{K}$ is

$$K_{p+n,p} = -\frac{1}{k} \sum_{i=n}^{i=2j} (1 + (i-j)(i-j-n)\frac{3}{j(j+1)})e^{-(i-j)^2}$$

$$= -\frac{1}{k}\frac{3}{j(j+1)} \sum_{i=n}^{i=2j} \{(1 - (i-j)^2)e^{-(i-j)^2}$$

$$- (1 - n(i-j))e^{-(i-j)^2} + \frac{j(j+1)}{3}e^{-(i-j)^2}\}.$$

Note that $(1 - (i-j)^2)e^{-(i-j)^2}$ is a Laplacian-of-Gaussian, and that if we hold $i = n$ and iterate over $n$ (the elements of a column in $\mathbf{K}$), we obtain a difference of Gaussians and LoG's, each with finite support; summing over $i$ gives a superposition of these curves, each with a different support. To generalize to non-regular sampling, simply increment $i$ by the difference between neighboring points. To generalize to multidimensional manifolds, note that the above arguments apply to any subset of points forming a geodesic line on $\mathcal{M}$, and by the linearity of $\mathbf{K}$ and the Laplacian operator, to any linear combination of different subsets of points forming different geodesics.

**Proposition 5.** *The near-zero eigenvalues of $I - G - \bigtriangledown^2 G$ grow quadratically.*

*Proof.* (prop. 5) Consider the harmonic equation, which describes how the graph vibrates in the space normal to its embedding: $-(I - G - \bigtriangledown^2 G)Y(x,t) = d^2 Y(x,t)/d^2 t$, with $Y(x,t)$ being the displacement at time $t$ and position $x$ (in manifold-intrinsic coordinates). For periodic motion, set $Y(x,t) = \sin(\omega t) \cdot Y(x)$, with $Y(x)$ being a vibrational mode. After substitution and cancellation, the harmonic equation simplifies to $(I - G - \bigtriangledown^2 G)Y(x) = \omega^2 \cdot Y(x)$, confirming that the mode $Y(x)$ is an eigenfunction of the operator $I - G - \bigtriangledown^2 G$. One can verify by substitution that $Y(x) = \sin(ax+b)$ for $a \in \{1, 2, \cdots, N\}, b \in \mathbb{R}$ is an orthogonal basis for solutions (eigenvectors) with eigenvalues on the sigmoid curve $\omega^2 = 1 - (1 + a^2/\sqrt{2\pi})e^{-a^2}$. A series expansion around $a = 0$ reveals that the leading term is quadratic.

*Proof.* (prop. 1) Expansion generates a new neighborhood whose parameterization is affine to those of its constituent neighborhoods, thus its nullspace is orthogonal to $\mathbf{K}$.

*Proof.* (prop. 2) Because of halving, at any scale the number of vertices in each neighborhood expansion is, on average, a constant $v \ll N$ that is determined only by the intrinsic dimensionality and the average size of the original local neighborhoods. Halving also guarantees that the total number of neighborhood expansions is $\sum_i (\frac{1}{2})^i N < N$. Together these establish $O(N)$ time. In each of the fewer than $N$ neighborhood expansions, a point receives on average $d$ constraints from new neighbors—the same or less than it receives in each of the $N$ original neighborhoods.

*Proof.* (prop. 3) Since $\mathbf{F}$ is a variance-preserving rotation of the constraints, one can always rotate the $f$-dimensional row-space of $\mathbf{F} = [\mathbf{f}_1, \cdots, \mathbf{f}_f]$ so that $\forall_i \mathbf{f}_i^\top \mathbf{b} > 0$. Then any infeasible solution $\tilde{G}$ can be scaled by $z > 0$ such that $\forall_i \mathbf{f}_i^\top \mathbf{A}^\top \text{svec}(z\tilde{G}) \leq \mathbf{f}_i^\top \mathbf{b}$, with any differences made up by nonnegative slack variables.

**Claims**

1.  A method for selecting a particular model of a class of objects from a set of models of the class, wherein the class models are graphs, each graph including a plurality of vertices representing objects in the class and edges connecting the vertices, comprising:

    grouping subsets of vertices of a selected set of graphs representing the class of objects to produce a subgraph;
    selecting a set of anchor vertices from the subgraph;

determining sub-graph parameterizations for the set of anchor vertices of the subgraph; and
combining the subgraph parameterizations with the set of class models to identify a particular class model.

Figure 1

200

Prior Art
Figure 2

Input Class Models — 301

Select Sub-graph — 310

Determine Sub-graph parameterizations — 320

Combine — 330

Particular Class Model — 331

302

314 315 311 313 312

parameterizations — 321

300

Figure 3

EP 1 770 597 A1

Figure 4

EP 1 770 597 A1

Figure 5

Figure 6
600

**European Patent Office**

## EUROPEAN SEARCH REPORT

Application Number

EP 06 01 9566

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TENENBAUM J B ET AL: "A global geometric framework for nonlinear dimensionality reduction" SCIENCE, AMERICAN ASSOCIATION FOR THE ADVANCEMENT OF SCIENCE,, US, vol. 290, no. 5500, 22 December 2000 (2000-12-22), pages 2319-2323, XP002971558 ISSN: 0036-8075 * abstract; figures 1,3,4; table 1 * ----- | 1 | INV. G06K9/62 |
| X | LI YANG: "K-edge connected neighborhood graph for geodesic distance estimation and nonlinear data projection" PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, vol. 1, 23 August 2004 (2004-08-23), pages 196-199, XP010724199 ISBN: 0-7695-2128-2 * abstract; figures 2,3 * * page 196 * ----- | 1 | |
| A | LEE J A ET AL: "Nonlinear dimensionality reduction of data manifolds with essential loops" NEUROCOMPUTING ELSEVIER NETHERLANDS, vol. 67, August 2005 (2005-08), pages 29-53, XP002406558 ISSN: 0925-2312 * abstract; figures 1,5 * ----- -/-- | 1 | TECHNICAL FIELDS SEARCHED (IPC)<br><br>G06K |

The present search report has been drawn up for all claims

| Place of search | Date of completion of the search | Examiner |
|---|---|---|
| Munich | 14 November 2006 | Müller, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**European Patent Office**

**EUROPEAN SEARCH REPORT**

Application Number

EP 06 01 9566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN H ET AL: "Crime data mining: a general framework and some examples" COMPUTER IEEE COMPUT. SOC USA, vol. 37, no. 4, April 2004 (2004-04), pages 50-56, XP002371053 ISSN: 0018-9162 * abstract; figure 2 * ----- | 1 | |
| D,A | BRAND MATTHEW: "From subspaces to submanifolds" TECHNICAL REPORT TR2004-134, MITSUBISHI ELECTRIC RESEARCH LABORATORIES, December 2004 (2004-12), pages 1-15, XP002406559 * the whole document * ----- | 1 | |
| D,A | ROWEIS S T ET AL: "Nonlinear dimensionality reduction by locally linear embedding" SCIENCE AMERICAN ASSOC. ADV. SCI USA, vol. 290, no. 5500, 22 December 2000 (2000-12-22), pages 2323-2326, XP002406560 ISSN: 0036-8075 * abstract; figures 1-3 * ----- | 1 | TECHNICAL FIELDS SEARCHED (IPC) |
| P,X | MATTHEW BRAND: "Nonrigid Embeddings for Dimensionality Reduction" PROC. EUROPEAN CONFERENCE ON MACHINE LEARNING EMCL; LNCS 558, 3 October 2005 (2005-10-03), pages 47-59, XP019021190 * the whole document * ----- | 1 | |

The present search report has been drawn up for all claims

| Place of search | Date of completion of the search | Examiner |
|---|---|---|
| Munich | 14 November 2006 | Müller, Martin |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

*   US 932791 A

### Non-patent literature cited in the description

*   **W.T. TUTTE.** How to draw a graph. *Proc. London Mathematical Society,* 1963, vol. 13, 743-768
*   **BELKIN et al.** Laplacian eigenmaps for dimensionality reduction and data representation. *Neural Information Processing Systems,* 2002, vol. 14
*   **ROWEIS et al.** Nonlinear dimensionality reduction by locally linear embedding. *Science,* 22 December 2000, vol. 290, 2323-2326
*   **DONOHO et al.** Hessian eigenmaps. *Proceedings, National Academy of Sciences,* 2003
*   **BRAND.** Charting a manifold. *Advances in Neural Information Processing Systems,* 2003, vol. 15
*   Nonlinear dimension reduction via local tangent space alignment. **ZHANG et al.** Proc., Conf. on Intelligent Data Engineering and Automated Learning. Springer-Verlag, 2003, 477-481
*   **BRAND.** From subspaces to submanifolds. *Proceedings, British Machine Vision Conference,* 2004
*   **KNYAZEV.** Toward the optimal preconditioned eigensolver. *SIAM Journal on Scientific Computing,* 2001, vol. 23 (2), 517-541